# EUROPEAN PATENT APPLICATION

(11) **EP 3 339 701 A1**
(43) Date of publication of application: **27.06.2018**
(21) Application number: 17207228.2
(22) Date of filing: 14.12.2017
(51) Int. Cl.: F16K 27/08, F23N 1/00

(54) **GUIDE ELEMENT FOR ROTATING STEM OF A TAP AND ASSOCIATED TAP**

(30) Priority: 21.12.2016 IT 201600129135
(71) Applicant: MP Gas Controls S.p.A., 25055 Pisogne (Brescia) (IT)
(72) Inventor: TORCOLI, Roberto, 25055 PISOGNE (BRESCIA) (IT)
(74) Representative: Tarabbia, Luigi

(57) **Abstract**

A guide element (10) for a rotating stem of a tap comprises a base (20) body and a collar (11) between which an axial hole (12) of substantially circular section extends; the axial hole (12) has ribs (15) protruding towards the inside of the axial hole (12) and extending over the axial extension of the collar (11), identifying a plurality of radial recesses (14) each extending between two adjacent ribs (15); moreover, the walls of the radial recesses (14) are inclined with respect to the axis with a draft angle adapted to allow the extraction of the body from the shape of a mould while the walls of the ribs (15) have a substantially null inclination with respect to the axis.

## Description

### Technical Field

The present invention generally concerns the sector of the taps, and in particular of the gas taps, as well as a guide element for a rotating stem of a tap and, for structural integration, also relates to a tap using said guide element.

### Prior art

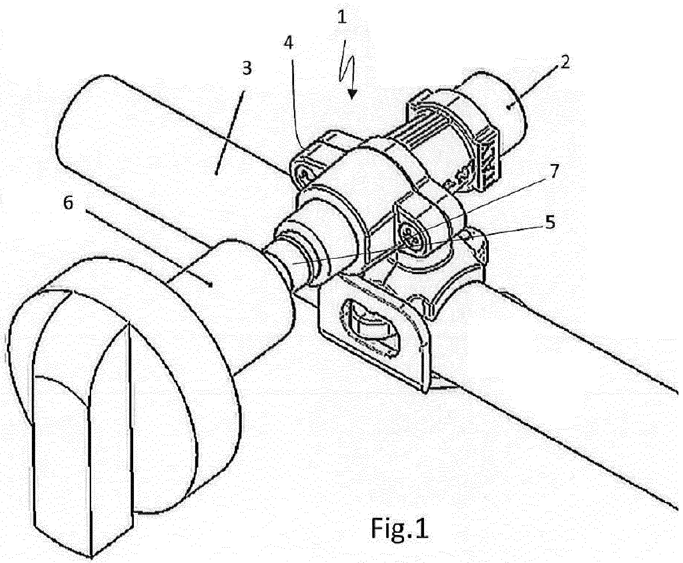

As shown in Figure 1 (representative figure of the prior art), in any gas tap 1 it is possible to identify at least the following elements: a valve body 2 connected to a line 3 for supplying the gas to the tap, a distributing cone, a cap or guide element 4 and a stem 5 of the tap 1.

In particular, the stem 5 of the tap is generally a metal body rotating integrally with the internal component of the valve body which, with its rotation, allows a gradual opening and/or closure of the tap itself. The guide element 4 is placed on the valve body and comprises, in its simplest form, a hole within which the stem of the tap itself passes.

Typically, the said guide element 4 is fixed on the body of the valve by means of a plurality of fixing screws 7. On the end portion of the stem a knob 6 is then fixed, which is actuated, in use, by the user: by imparting a rotation torque on the knob, an equivalent rotation of the stem and of the internal component of the valve body is determined.

A characteristic particularly perceived by the market is that the knob, and, likewise, the stem on which it is installed, does not have an excessive oscillation with respect to the axis of rotation. An excessive oscillation is generally unpleasant for the user, as it makes the tap as cheap, or of poor quality. Moreover, the excessive oscillation of the stem with respect to its axis of rotation may cause an incorrect operation of the valve, given the reciprocal movement of the different parts of the valve, and in addition an early and dangerous wear of the components inside the tap and sealing parts which prevent the gas in the valve from leaking into unwanted points.

The tap manufacturers must therefore ensure a reduced oscillation movement of the stem with respect to the axis of rotation of the same and this, at a constructive level, implies that in the coupling zone between the stem and the guide element, the clearance is small and constant. Indicatively, the clearance in terms of diameter between the guide element and the stem 5 oscillates from a few hundredths of a millimetre to slightly more than a tenth of a millimetre. For this reason, in the guide cylindrical zone of the guide elements very low tolerances, and in the order of a few hundredths of a millimetre, are required.

At the industrial level, in order to ensure such coupling precision, different processes have been defined. In general, since the guide elements and the respective taps are produced in considerable quantities, measurable in millions of pieces per year, the research of the producers has gone towards those processes that are as cheap as possible.

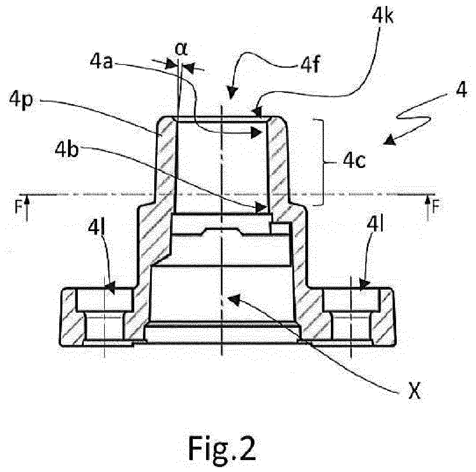

As illustrated in Figure 2, a guide element 4 has an inner cavity 4f having a cylindrical section in which an end portion or collar 4c in which the diameter of the hole is substantially equal to the diameter of the stem of the tap is identified a first peripheral zone 4a distinguished by a minimum diameter d1, and a more internal zone 4b, at the foot of the collar, distinguished by a diameter d2 greater than the diameter d1. The axial extension along the axis X of rotation of the stem, ideally coinciding with the axis X of the hole 4f of the guide element, is defined as height H of the collar 4c. Having observed the difference in diameter between the previous two zones, it is evident that a section of the guide element along a plane comprising the said axis X, in the collar, will not show walls parallel to the axis X but rather inclined with respect to it of a corner α named draft angle. The draft angle α is necessary in order to allow the extraction of the piece from the mould when it is melted. Because of this angle, when the piece is obtained in a melt or die-casting process, the collar takes substantially a frusto-conical internal shape. The draft angle in the collar, for an aluminium die-cast piece, is typically comprised between 0.5° and 1°.

The front end zone indicated by the arrow 4k represents that portion of the circular section cavity 4f where the two halves of the mould typically meet: in this zone it is possible that a burr is created during the die-casting process, disadvantageously caused by the fact that a small but still non-null quantity of fluid material insinuates between the two portions of the mould.

Particularly, the burr can be created in the aluminium die-casting, since the injection pressures of the liquid metal are very high, much more than what occurs, e.g., when the guide element is made of zamak. During time, such phenomenon is amplified, and causes wear in the moulds, with the consequent and disadvantageous reduction of the coupling precision and therefore of realization of the particular zone of the guide element, which therefore worsens in quality and is more subject to allow the realization of the said oscillation phenomena.

Among the methods currently used to make guide elements able to meet the above requirements there are: zamak die-casting, aluminium die-casting, sheet moulding.

In the zamak die-casting, particular moulds are used so as to make a collar in which the internal profile does not require further processing before the overall assembly of the tap. This is made possible because in the zamak die-casting, the minimum drafts necessary for carrying out the process and especially in order to allow extraction from the mould are markedly reduced, sometimes even equal to 0° for short sections as could be the guide zone of the stem. This means that the difference between the diameter d1 and the diameter d2 is very small (or even null, depending on the needs of the moment); moreover, by means of the zamak die-casting it is possible to avoid the presence of burr in the previously mentioned zone. This is made possible because the zamak is very fluid, and therefore does not require high injection pressures.

The zamak parts, however, according to the regulations in force, cannot be exposed to temperatures exceeding 80°C: for this reason, in most applications, zamak cannot be used. Vice versa, the aluminium is homologable for uses up to 150°C, where the temperature limit of 150°C is given by the remaining parts of the tap, such as, e.g., o-rings or grease, since aluminium could also resist to higher temperatures.

A further disadvantage of the zamak die-casting is that the guide element thus produced is more expensive than it would be if it was made of aluminium, both for a greater cost of the raw material, and for a greater cost in the die-casting process.

In the aluminium die-casting process, in order to realize the guide element, at the end of the moulding phase the piece is not finished and, instead, requires further processing steps, in particular of the hole on the collar. In particular, in the aluminium die-casting the minimum draft angles α, which are necessary for carrying out the process and in order to allow the piece to be extracted from the mould, are significantly greater than those necessary for processing the zamak (typically for short sections such as the guide zone of the stem, values between 0.5° and 1° can be indicated). Consequently, the draft angle α in the realization of a guide element for aluminium die-casting exceeds the maximum permissible limit for correctly guiding the stem 5. Furthermore, during processing, a slight burr is created in the inner front part of the collar, thus at the tip of the arrow 4k, which must be removed before the mounting of the guide element on the tap: such removal takes place by countersinking and reaming, in order to correctly calibrate the diameter of the guide zone. Still alternatively, the correction of the draft angle α and elimination of the burr can advantageously take place by forcing the passage of a calibrated sphere inside the hole, then by plastic deformation.

Although, therefore, the use of aluminium advantageously allows the guide element to be brought to temperatures even higher than 80°C, and has a lower cost compared to the zamak, it is clear that, as a result of the die-casting, further processing is necessary which is expensive and extends the time to obtain the finished product, ready for installation on the tap. Finally, if the moulded sheet is used to make the guide element, as a result of the moulding phase, the piece no longer needs processing, in particular in the hole of the collar, in order to eliminate burrs or excessive draft angles α. However, the moulds necessary for processing sheet parts are extremely expensive, having, in fact, a cost that can also exceed 500% of the cost of an aluminium die-casting mould, since the material used is steel.

Note that the use of moulded sheet implies a limitation in the maximum height H reachable by the collar, and this, in turn, affects the ability to optimize the resistance to oscillation along the said axis X.

The object of the present invention is therefore to describe a guide element for rotating stem of a tap and an associated tap which allow to solve the disadvantages described above.

### Summary of the Invention

According to the present invention, a guide element is provided for a rotating stem of a tap, the said guide element comprising:
- a body provided with a base and a collar, between which an axial hole extends, developing about an axis X substantially having a circular section, wherein
- the said hole has a plurality of ribs protruding towards the inside of the said hole and extending onto at least part of the axial extension of the said collar, identifying a plurality of radial recesses each extending between two contiguous ribs, and wherein,
- the walls of said radial recesses are inclined with respect to the said axis X with a draft angle α adapted to allow the extraction of the said body in the shape of a mould, while the walls of the said plurality of ribs have a substantially null inclination with respect to the said axis X (or at least an inclination comprised between 0,1° e 0,2°).

According to a preferred and non-limiting aspect of the present invention, the said walls of the said radial recesses, at a first end zone of the said collar, enclose an ideal circumference having a first diameter d1 and at a second end zone of the said collar opposite with respect to the said first zone, they enclose an ideal circumference having a second diameter d2 said second diameter having a larger dimension with respect to the said first diameter d1.

According to a preferred and non-limiting aspect, the said second zone is closer to the base than the said first zone.

According to a preferred and non-limiting aspect, said base comprises a plurality of through holes for fixing the said tap to the body, into which, in use, respective screws are introduced.

Preferably, but without limitation thereto, the said through holes present an axis parallel to said axis X.

Preferably, although without limitation thereto, the said through holes are opposite to the axial hole.

According to a preferred and non-limiting aspect, the said ribs are connected with said radial recesses.

According to a preferred and non-limiting aspect, at the said first zone of the said axial hole, the said ribs circumscribe a circumference of a lower diameter with respect to the circumference otherwise described by a plurality of radial recesses identified between said ribs.

According to a further preferred and non-limiting aspect, at the said first zone of the said axial hole, the said ribs circumscribe a circumference having a diameter substantially equal to the circumference described by the said plurality of radial recesses.

According to a preferred and non-limiting aspect of the present invention, the radial depth of the said ribs can vary according to the position and/or depth with respect to the mouth of the axial hole (e.g., the ribs may always be at the same distance from the centre, while the said radial recesses are shaped in such a way that the protrusion of the ribs varies according to the position).

More in detail, according to a preferred and non-limiting aspect, the radial depth of the said ribs is minimal at the said first zone.

According to a further optional detail aspect of the invention, at said first zone the said thickness can be null.

According to the present invention, it is further realized a gas tap, characterised in that it comprises a valve body hydraulically connected hermetically to a gas line, wherein within the said valve body a progressive opening or closing valve of the said tap is actuated by a shaft or stem rotating about its own axis of rotation ideally coinciding with the axis of an axial hole of a guide element according to any one of the preceding claims.

### Description of the Figures

The invention will now be described in a preferred and non-limiting embodiment thereof with reference to the accompanying Figures in which:
- Figure 1 shows a perspective view of a guide element and a related gas tap according to the prior art;
- Figure 2 shows a side section of the tap and of the guide element of Figure 1;
- Figure 3 shows a section along the lines F-F of Figure 2;
- Figure 4 shows a perspective view of a first embodiment of a guide element for a tap according to the present invention;
- Figure 5 shows a side section of the guide element of Figure 4;
- Figure 6 shows a section along the lines C-C of Figure 5;
- Figure 7A shows a detailed view of a part of the section of Figure 6;
- Figure 8 shows a perspective view of a second embodiment of the guide element for a tap according to the present invention;
- Figure 9 shows a side sectional view of the guide element of Figure 8;
- Figure 10 shows a sectional view along the lines B-B of Figure 9.

### Detailed description of the invention

With reference to the attached figures, the reference number 10 indicates as a whole a guide element for a gas tap, made of metallic material and in particular provided with a valve body having a rotating stem designed to be connected to a knob holdable by the user, which by rotation allows the opening and/or progressive closure of the respective valve.

In detail, the guide element 10 comprises a body having a base in use coupled to the body of the valve, particularly at the zone from which the rotating stem protrudes, and a distal portion opposite to it, from which the stem exits the portion in a sufficient way to allow the coupling with the said knob.

In particular, the base has a significantly larger structure than the distal portion, which includes a perforated collar 11.

Along the whole body, between the said base 20 and the said distal portion there is a through-hole 12, extending along the axis X which in use coincides with the ideal axis of rotation of the tap stem.

To make the guide element 10 fixed to the body of the valve, the base also comprises a pair of lateral holes 13 respectively placed on the left and right side of the base itself, within which in use self-threading screws in use are inserted, suitable to be removably coupled with the body of the valve. In this way, when the screws introduced into the lateral holes 13 are tightened, the guide element 10 of the tap stem is integrally fixed to the body of the valve and advantageously plays, in fact, a guide role so that the oscillation of the stem with respect to the said axis X is reduced and theoretically cancelled, so as to contribute to the preservation of the sealing means which prevent the gas from leaking from the valve body through unwanted ways, to the correct operation of the valve and, likewise, to contribute to the sensation of strength that the operator experiences when he acts manually on the knob.

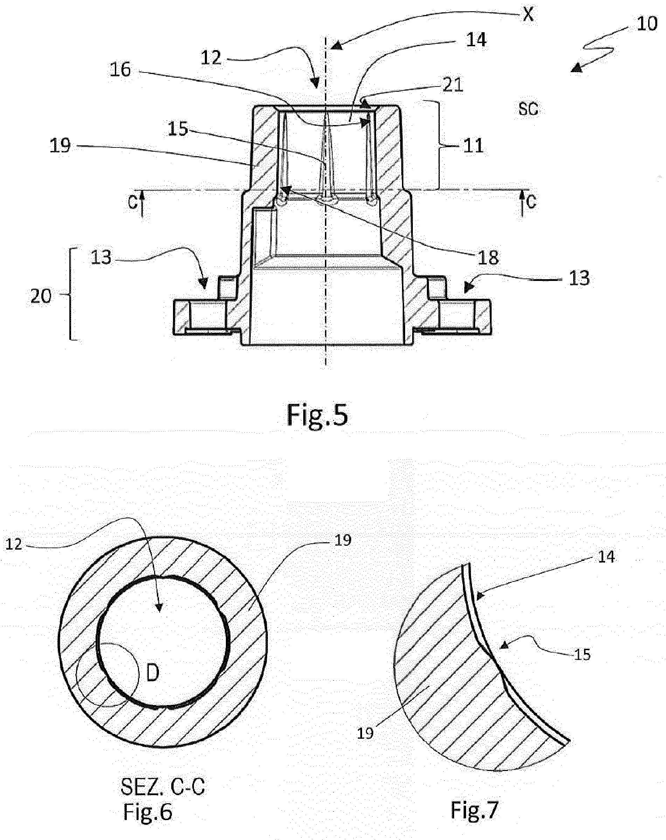

As shown in Figure 5, in detail, the collar 11 has a perforated wall 19, in which the axial hole 12 has a substantially circular section. More in detail, between the said base 20 and the said distal portion there is a through-hole 12, extending along the axis X which in use coincides with the ideal axis of rotation of the tap stem. In particular, the axial hole 12 extends between the base 20 and the mouth of the collar 11, which represents its portion axially farthest from the base 20.

When the guide element 10 is observed in section along a plane comprising the said axis X, as in the case of Figure 5, it is possible to observe that inside the collar 11 the internal walls of the hole are inclined with respect to the axis X, with a symmetrical inclination particularly given by the substantial circularity of the hole, so as to determine an internal frusto-conical section whose walls with respect to the axis X have an angle α named draft angle.

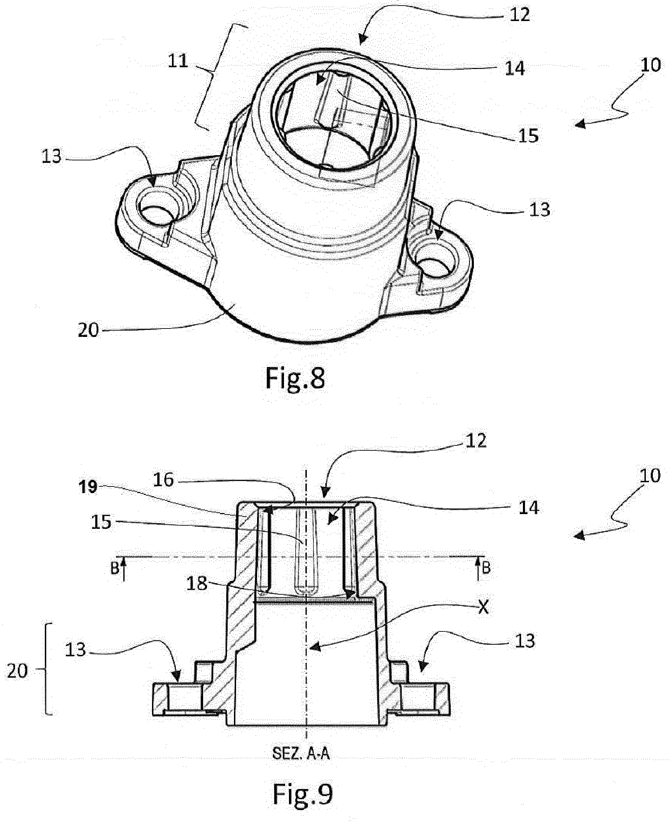

In particular, the internal surface of the axial hole 12 at the collar 11 is not perfectly circular, but as clearly visible in Figure 5 and in Figure 9, it presents a plurality of n ribs 15 which extend into the axial hole 12 each having a draft angle substantially equal to zero (e.g., varying between 0,1° and 0,2°): identified as in Figure 6 and in Figure 7 a given nominal diameter of the axial hole 12 at a given height of the collar.

In Figures 6 and 7 the one corresponding to the section line C-C - the ribs 15 project inside the circumference of the nominal diameter and identify a plurality of radial recesses 14; between two circumferentially consecutive ribs there is a radial recess 14. Preferably, but without limitation thereto, ribs and radial recesses 14 extend throughout the height H of the collar 11.

At the distal portion of the collar 11 a first area 16 of the axial hole 12 is shown, in which the radial recesses 14 identify an ideal circumference having a diameter of a first measure d1, while in the portion of the collar 11, deeper and proximate to the base, there is a second zone 18 of the axial hole 12 in which the radial recesses 14 identify an ideal circumference having a diameter of a second measure d2, greater than d1. Between the said first zone 16 and second zone 18, the diameter of the ideal circumference identified by the radial recesses 14 changes progressively.

Having a null draft angle, at the ribs 15 an ideal circumference is identified which has a measurement diameter d3, which remains constant along the entire extension of the collar 11. The ratio between the measurements of the diameters is such that d3=d1<d2.

The protuberance of the ribs 15, due to the draft of the radial recesses, decreases as it moves from the inner portion of the collar towards the distal portion, i.e. from the second zone 18 to the first zone 16. Thus at the upper end of the first zone 16, the ratio between the measurements of the diameters may conveniently be such that ideally d3=d1<d2.

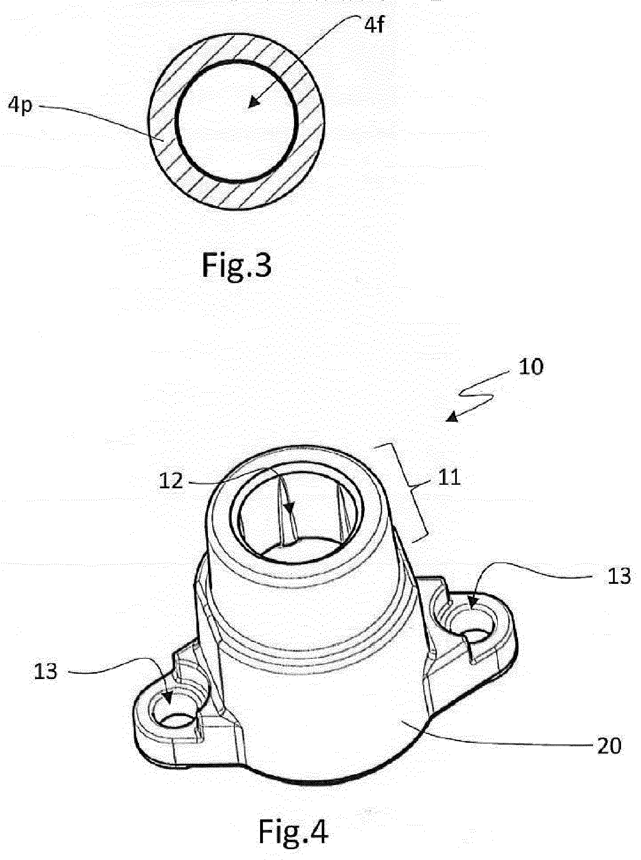

According to the different embodiments of the invention, there is the possibility that the dimensional relationship d3=d1 exists over the whole extension of the collar 11 (as shown in Figure 4), or that the dimensional relationship d3<d1 exists on the whole extension of the collar 11 (as shown in Figure 8).

With respect to the length of the entire ideal circumference, the sum of the circumference arcs subtended by the ribs 15 is only a small portion, particularly not more than 35%. Likewise, also in relation to the overall guide surface defined by the assembly of ribs 15 and radial recesses 14 along the whole collar 11, the surface presented by the ribs 15 is only a part of the latter (e.g., equal to 30-35%).

For this reason, although having a draft angle α almost equal to zero, the ribs do not hinder the extraction of the guide element 10 from the mould, and at the same time they create a substantially cylindrical guide zone for the tap stem that does not require further processing. Since the total surface with a draft angle α substantially equal to zero is small, it is advantageously possible to increase the draft angle α at the radial recesses without thereby causing a deterioration in the guide capacity of the tap stem so as to limit its inclination along the axis X. Advantageously, moreover, any burr that may form in the closure of the mould is formed at the terminal section of the collar 11, where a countersink 21 is present and where there is also a complete absence of the ribs 15, therefore on a circular perimeter. Any minimum mechanical machining of reaming and turning on the countersink 21 affect less than the complete reaming of the collar on the production cost of the realization of the optimized guide element 10 described up to now.

In other words, the first embodiment of the invention allows to solve the draft problem of the zone inside the collar substantially eliminating the need for a process for calibrating the cylindricity of the collar 11, while maintaining the advantages described above with respect to aluminium die-casting.

Figures 8-10 show instead a second preferred and non-limiting embodiment of the present invention. As in the case of the first embodiment of the present invention, the guide element 10 comprises a body having a base in use coupled to the body of the valve, particularly at the zone from which the rotating stem protrudes, and a distal portion opposite to it, from which the stem exits the portion in a sufficient way to allow the coupling with the said knob.

In particular, the base has a significantly larger structure than the distal portion, which includes a perforated collar 11.

Also in the second embodiment, between the said base 20 and the said distal portion there is a through hole 12, extending along the axis X which in use coincides with the ideal axis of rotation of the tap stem: in particular, the axial hole 12 extends between the base 20 and the mouth of the collar 11, which represents its portion axially farthest from the base 20. To make the guide element 10 fixed to the body of the valve, the base also comprises a pair of lateral holes 13 respectively placed on the left and right side of the base itself, within which in use self-threading screws in use are inserted, suitable to be removably coupled with the body of the valve.

In this way, when the screws introduced into the lateral holes 13 are tightened, the guide element 10 of the tap stem is integrally fixed to the body of the valve and advantageously plays, in fact, a guide role so that the oscillation of the stem with respect to the said axis X is reduced and theoretically cancelled, so as to contribute to the preservation of the sealing means which prevent the gas from leaking from the valve body through unwanted ways, to the correct operation of the valve and, likewise, to contribute to the sensation of strength that the operator experiences when he acts manually on the knob.

As shown in Figure 9, in detail, the collar 11 has a perforated wall 19, in which the axial hole 12 has a substantially circular section. When the guide element 10 is observed in section along a plane comprising the said axis X, as in the case of Figure 9, it is possible to observe that inside the collar 11 the internal walls of the hole are inclined with respect to the axis X, with a symmetrical inclination particularly given by the substantial circularity of the hole, so as to determine an internal frusto-conical section whose walls with respect to the axis X have an angle α named draft angle. In particular, the internal surface of the axial hole 12 at the collar 11 is not perfectly circular, but as clearly visible in Figure 5 and in Figure 9, it presents a plurality of n ribs 15 each having a draft angle substantially equal to zero and protruding towards the inside of the axial hole 12.

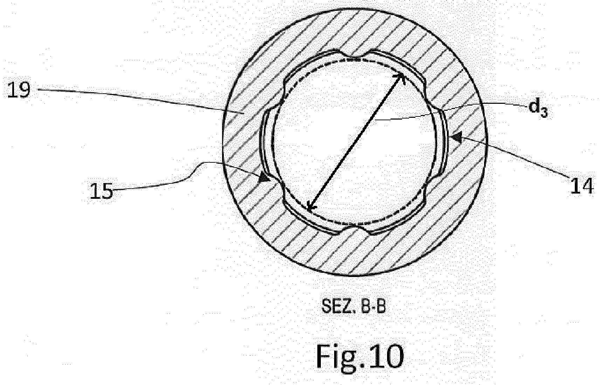

Once it has been identified as In Figure 6 and in Figure 7 a determined nominal diameter of the axial hole 12 at a given height of the collar - in Figure 10 the one corresponding to the section line B-B - the ribs 15 project inside the circumference of the nominal diameter and identify a plurality of radial recesses 14; between two circumferentially consecutive ribs there is a radial recess 14. Preferably, but without limitation thereto, ribs and radial recesses 14 extend throughout the height H of the collar 11.

At the distal portion of the collar 11 a first area 16 of the axial hole 12 is shown, in which the radial recesses 14 identify an ideal circumference having a diameter of a first measure d1, while in the portion of the collar 11, deeper and proximate to the base, there is a second zone 18 of the axial hole 12 in which the radial recesses 14 identify an ideal circumference having a diameter of a second measure d2, greater than d1. Between the said first zone 16 and second zone 18, the diameter of the ideal circumference identified by the radial recesses 14 changes progressively.

Having a null draft angle, at the ribs 15 an ideal circumference is identified which has a measurement diameter d3, which remains constant along the entire extension of the collar 11. The ratio between the measurements of the diameters is such that d3<d1<d2.

With respect to the first embodiment, in the second embodiment of the guide element object of the present invention, the protuberance of the ribs 15 is greater than in the previous case and furthermore from the second zone 18 to the first zone 16 and ideally remains always present: thus, also at the upper end of the first zone 16, the ratio between the diameter measurements is such that ideally d3<d1<d2.

As in the case of the first embodiment, also in the second one the presence of the ribs 15 ensures the possibility to extract the piece from the mould. In particular, since the total surface of the null or quasi-null draft angle α ribs 15 is significantly small, it is possible to increase the draft angle α at the remaining part of the guide surface corresponding to the radial recesses 14.

With respect to the length of the entire ideal circumference, the sum of the circumference arcs subtended by the ribs 15 is only a small portion, particularly not more than 35%. Likewise, also in relation to the overall guide surface defined by the assembly of ribs 15 and radial recesses 14 along the whole collar 11, the surface presented by the ribs 15 is only a part of the latter.

For this reason, although having a draft angle α almost equal to zero, the ribs do not hinder the extraction of the guide element 10 from the mould, and at the same time they create a substantially cylindrical guide zone for the tap stem that does not require further processing. Since the total surface with a draft angle α substantially equal to zero is small, it is advantageously possible to increase the draft angle α at the radial recesses without thereby causing a deterioration in the guide capacity of the tap stem so as to limit its inclination along the axis X.

As in the case of the first embodiment, also in the case of the second embodiment of the guide element 10 described here, any burr resulting from the mould is formed in the closure zone at the terminal section of the collar 11 where there is a countersink 21. However, in the case of the second embodiment of the guide element 10 described here, the burr is present at a zone from the non-cylindrical perimeter, but on a profile which can conveniently be defined as lobes. The advantage with respect to the first embodiment of the guide element 10 lies in the fact that if in the first embodiment the burr on a circular section contrasts with the insertion of the stem on substantially the whole perimeter, with a lobed profile the interference of the burr on the stem is profiled on a particularly smaller surface at the ribs. The low resistance at the first passage of the stem during the assembly phase of the valve, allows the stem itself to remove the burr, thus eliminating the manual elimination phase of the same. Therefore, this solution solves the problem of the draft in the guide zone by eliminating the recalibration process of the guide portion, and also solves the problem of the possible presence of the burr at the mould closure zone.

Further characteristics which both the first and second embodiments described herein have in common are that the walls of the ribs 15 are preferably but without limitation thereto connected with the walls of the radial recesses 14, so as to advantageously create an internal surface of the axial hole 12 without interruption and in particular free from angular points.

Although in the appended Figures to the present description ribs provided with a development parallel, and thus linear, to the axis X have been shown, this feature is not to be understood in a limiting manner: it is in fact also possible to produce ribs and radial recesses of helical profile, which therefore observed along the direction parallel to that of the axis X, identify a spiral that can have both a constant and a variable pitch...although in this case it may be necessary to adopt production methods different from moulding/die-casting (without departing form the scope of protection of the present invention).

It is finally evident that the guide element object of the present invention additions, modifications or variations can be applied, which are obvious to a person skilled in the art, without departing from the scope of protection provided by the appended claims.

## Claims

1. A guide element (10) for a rotating stem of a tap, the said guide element comprising:
- a body provided with a base (20) and with a collar (11), between which an axial hole (12) extends, developing about an axis (X) preferably having a circular section, wherein
- the said axial hole (12) has a plurality of ribs (15) protruding towards the inside of the said axial hole (12) and extending onto a first part of the axial extension of the said collar (11), identifying a plurality of radial recesses (14) each extending between two contiguous ribs, and wherein
- the walls of said radial recesses (14) are inclined with respect to the said axis (X) with a draft angle (a) adapted to allow the extraction of the said body in the shape of a mould, while the walls of the said plurality of ribs (15) have a substantially null inclination with respect to the said axis (X),
- a second part of the axial extension of the collar (11) has a countersink (21), said countersink (21) being located at a terminal section of the collar opposite to the base (20) with respect to the collar (11) itself.

2. The guide element (10) according to claim 1, wherein the said walls of the said radial recesses (14), at a first end zone (16) of the said collar, enclose an ideal circumference having a first diameter (d1) and at a second end zone (18) of the said collar opposite with respect to the said first zone (16), they enclose an ideal circumference having a second diameter (d2) said second diameter having a larger dimension with respect to the said first diameter (d1).

3. The guide element (10) according to claim 2, wherein the said second zone (18) is closer to the base with respect to the said first zone (16).

4. The guide element (10) according to any one of the preceding claims, wherein said base comprises a plurality of through holes (13) for fixing the said tap to the body, into which, in use, respective screws are introduced.

5. The guide element (10) according to claim 4, wherein the said through holes (13) have a parallel axis to the said axis X.

6. The guide element (10) according to any one of the preceding claims, wherein the said ribs (15) are connected with said radial recesses (14).

7. The guide element (10) according to any one of the preceding claims, wherein at the said first zone (16) of the said axial hole (12), the said ribs (15) circumscribe a circumference of a lower diameter with respect to the circumference otherwise described by the plurality of radial recesses (14) identified between said ribs.

8. The guide element (10) according to any one of the preceding claims, wherein at the said first zone (16) of the said axial hole (12), the said ribs (15) circumscribe a circumference of a substantially equivalent diameter (d3) to the circumference described by the said plurality of radial recesses (14).

9. The guide element (10) according to any one of the preceding claims, wherein the radial depth of the said ribs (15) with respect to the said radial recesses (14) varies in accordance with the depth position with respect to the mouth of the axial hole (12).

10. The guide element (10) according to claim 9, wherein the radial depth of the said ribs (15) with respect to the said radial recesses (14) is minimal at the said first zone.

11. The guide element (10) according to claim 10, wherein at the said first zone the radial depth of the said ribs (15) with respect to the said radial recesses (14) is null.

12. A gas tap, **characterised in that** it comprises a valve body hydraulically connected hermetically to a gas line, wherein within the said valve body a progressive opening or closing valve of the said tap is actuated by a shaft or stem rotating about its own axis of rotation ideally coinciding with the axis of an axial hole of a guide element (10) according to any one of the preceding claims.
